Europäisches Patentamt

European Patent Office

Office européen des brevets

(19)

(11) **EP 1 391 095 B1**

(12) **FASCICULE DE BREVET EUROPEEN**

(45) Date de publication et mention
de la délivrance du brevet:
**29.09.2004 Bulletin 2004/40**

(21) Numéro de dépôt: **02740790.7**

(22) Date de dépôt: **15.05.2002**

(51) Int Cl.7: **H04L 27/26**, H04L 25/02

(86) Numéro de dépôt international:
**PCT/FR2002/001639**

(87) Numéro de publication internationale:
**WO 2002/098095 (05.12.2002 Gazette 2002/49)**

(54) **PROCEDE D'ESTIMATION DE LA FONCTION DE TRANSFERT D'UN CANAL DE TRANSMISSION D'UN SIGNAL MULTIPORTEUSE ET RECEPTEUR CORRESPONDANT**

VERFAHREN ZUR SCHÄTZUNG DER ÜBERTRAGUNGSFUNKTION EINES MEHRTRÄGER-SIGNALÜBERTRAGUNGSKANALS UND EINES ENTSPRECHENDEN EMPFÄNGERS

METHOD FOR ESTIMATING THE TRANSFER FUNCTION OF A MULTICARRIER SIGNAL TRANSMISSION CHANNEL AND CORRESPONDING RECEIVER

(84) Etats contractants désignés:
**AT BE CH CY DE DK ES FI FR GB GR IE IT LI LU MC NL PT SE TR**

(30) Priorité: **30.05.2001 FR 0107106**

(43) Date de publication de la demande:
**25.02.2004 Bulletin 2004/09**

(73) Titulaire: **Wavecom**
**92442 Issy les Moulineaux (FR)**

(72) Inventeurs:
• **ALARD, Michel**
**F-75004 PARIS (FR)**
• **ROUXEL, Alexandre**
**F-35000 Rennes (FR)**
• **GOUDARD, Nathalie**
**F-75020 PARIS (FR)**
• **BIETRIX, Franck**
**F-75009 PARIS (FR)**

(74) Mandataire: **Vidon, Patrice**
**Cabinet Vidon**
**16 B, rue Jouanet**
**B.P. 90333**
**Technopole Atalante**
**35703 Rennes Cedex 7 (FR)**

(56) Documents cités:
**EP-A- 0 802 656          EP-A- 0 838 928**

## Description

Le domaine de l'invention est celui de la transmission ou de la diffusion de données numériques, et/ou analogiques échantillonnées, en provenance et/ou à destination notamment de terminaux mobiles.

Les modulations multiporteuses, associées à un codage correcteur d'erreur et à un entrelacement, ont montré leur intérêt notamment pour les transmissions à haut débit en environnement radiomobile tel qu'illustré dans les brevets FR 2 601 210 et FR 2 733 869 traitants respectivement de la modulation OFDM (de l'anglais << Orthogonal Frequency Division Multiplexing >> ou en français << Multiplexage par Division Orthogonale des Fréquences >>) et de la modulation IOTA (de l'anglais << Isotropic Orthogonal Transform Algorithm >>).

Dans le cas d'une démodulation cohérente des données reçues, il est nécessaire, afin de pouvoir correctement démoduler l'information reçue par le récepteur, de pouvoir estimer convenablement le canal en tout point d'un plan temps-fréquence.

L'invention concerne notamment l'optimisation de techniques d'estimation de canal dans le cas d'une transmission à porteuses multiples dite transmission multiporteuses.

Généralement, lorsque des données sont transmises à haut débit sur un canal radio, le signal est soumis à des effets Doppler (liés aux déplacements de l'émetteur, du récepteur ou d'éventuels réflecteurs) et à des problèmes de chemins multiples (liés par exemple, à la réflexion du signal sur différents objets) entraînant un étalement de la réponse impulsionnelle du canal (en anglais << Delay Spread >>) ou des variations de l'amplitude du signal. Ces effets dépendent notamment de l'instant et de la fréquence considérés. Ainsi, le canal variant en temps et en fréquence est complexe et il est nécessaire de l'estimer correctement pour obtenir une bonne fiabilité de décodage des données reçues.

Selon l'état de l'art (cf. le brevet EP 0 838 928), dans le cas d'une modulation multiporteuse, l'estimation de canal à partir de laquelle on peut corriger au mieux les dégradations engendrées par un canal radiomobile, consiste à :

- insérer dans le flux de porteuses informatives des porteuses de référence à des emplacements connus du récepteur ;
- en déduire, à partir des valeurs prises par ces références en réception, la fonction de transfert du canal en ces points du plan temps-fréquence ; et
- obtenir, à partir de ces résultats, la fonction de transfert du canal sur l'ensemble des points d'un réseau temps-fréquence.

Pour ce faire, il existe notamment deux méthodes :

- l'estimation par pilotes répartis ( ou « scattered pilots » en anglais) : en émission, des symboles pilotes sont répartis régulièrement dans le plan temps-fréquence. A partir de ces pilotes, on obtient une version sous-échantillonnée du canal. En réception, on procède à une interpolation bidimensionnelle, en temps et en fréquence, pour déterminer la valeur du canal en tout point du réseau temps-fréquence. Cette méthode est notamment utilisée par la norme DVB-T (pour << Digital Vidéo Broadcasting - Terrestrial >> , en français << radio-diffusion vidéo numérique par voie terrestre).
- l'estimation par symbole multiporteuse de référence (encore appelé préambule): au moins un symbole de référence est placé en début d'une trame émise sur le canal. Grâce à ce(s) symbole(s), le canal est estimé en réception de la trame émise sur chacune des porteuses. Le canal pouvant être considéré comme quasi-statique sur une trame donnée (choix des paramètres du système tels que le canal varie lentement par rapport au temps symbole), l'estimation du canal sur le(s) symbole(s) de référence est valable pour l'ensemble des symboles OFDM de la trame (cette méthode est notamment appliquée à la norme HIPERLAN/2 de l'ETSI (ou European Télécommunication Standard Institute)).

Dans le cas d'une estimation par pilotes répartis, afin de limiter la complexité de l'estimateur de canal, on utilise généralement deux filtres d'interpolation monodimensionnels au lieu d'un filtre bidimensionnel. En effet , la complexité de mise en oeuvre est alors nettement inférieure pour une dégradation de la qualité d'estimation acceptable.

Pour le DVB-T, par exemple, un filtre de Wiener est utilisé pour l'interpolation en fréquence, tandis que l'interpolation en temps est une simple interpolation linéaire. L'interpolation linéaire n'est pas optimale mais elle apporte une complexité moindre par rapport à un filtre FIR bidimensionnel ou deux filtres FIR monodimensionnels en cascade.

L'interpolation se fait donc en temps puis en fréquence.

En outre, rendre adaptatif un filtre de Wiener, c'est-à-dire recalculer les coefficients du filtre en réception en fonction des paramètres du canal, est difficilement réalisable. De ce fait, un dimensionnement du filtre au pire cas de Doppler et d'étalement de la réponse impulsionnelle du canal (« Delay spread ») s'avère systématiquement nécessaire.

L'invention a notamment pour objectif de pallier ces inconvénients de l'art antérieur.

Plus précisément, un objectif de l'invention est d'optimiser le décodage d'une trame de données émise sur un canal à fort étalement Doppler lorsqu'une modulation multiporteuse est utilisée.

Un objectif est également d'optimiser l'estimation de la fonction de transfert d'un canal de transmission dans le cadre d'une transmission multiporteuse.

Un autre objectif de l'invention est de permettre une interpolation peu complexe de la fonction de transfert du canal sur l'ensemble d'un réseau temps/fréquence à partir des valeurs estimées de cette fonction aux emplacements des symboles pilotes insérés dans la trame de données émise.

Un autre objectif de l'invention est d'offrir un bon compromis entre débit utile et qualité de l'estimation de canal.

Ces objectifs, ainsi que d'autres qui apparaîtront par la suite, sont atteints à l'aide d'un procédé d'estimation de la fonction de transfert d'un canal de transmission d'un signal multiporteuse formé d'une succession temporelle de symboles constitués d'un ensemble d'éléments de données, chacun des éléments de données modulant une fréquence porteuse du signal, les éléments de données comprenant d'une part des éléments de référence, appelés pilotes, dont la valeur à l'émission est connue d'au moins un récepteur destiné à effectuer une réception du signal, et d'autre part des éléments de données dits informatifs, représentatifs d'au moins un signal source à transmettre.

Selon l'invention, un tel procédé comprend :

- une étape de détermination d'un jeu de séquences sphéroïdales aplaties discrètes (SSAD) bidimensionnelles ;
- une étape d'écriture de la fonction de transfert sous la forme d'une combinaison d'au moins certaines des séquences sphéroïdales aplaties discrètes bidimensionnelles du jeu ;
- une étape d'interpolation bidimensionnelle en temps et en fréquence d'au moins certains coefficients de la combinaison, de manière à obtenir une estimation de la fonction de transfert en tout point d'un réseau temps-fréquence.

On note qu'un espace temps-fréquence est un espace borné de type modèle permettant de représenter un signal multiporteuse.

Ainsi, l'invention permet la mise en oeuvre d'une estimation d'une fonction de transfert d'un canal de transmission d'un signal multiporteuse de complexité raisonnable et permettant le décodage des éléments de données informatifs de manière fiable et efficace même en présence d'effet Doppler important et/ou d'étalement de la réponse impulsionnelle du canal.

Selon une caractéristique particulière, le procédé est remarquable en ce que l'étape d'écriture met en oeuvre une projection des pilotes sur les séquences sphéroïdales aplaties discrètes bidimensionnelles.

Ainsi, l'invention permet avantageusement l'utilisation d'une base composée de SSAD bidimensionnelles.

Selon une caractéristique particulière, au cours de l'étape de détermination, le procédé met en oeuvre au moins une étape de sélection d'au moins certaines des séquences sphéroïdales aplaties discrètes, en fonction d'au moins une caractéristique du canal de transmission.

Ainsi, l'invention permet préférentiellement la sélection de SSAD bidimensionnelles particulièrement bien adaptées au canal, ce qui permet d'améliorer globalement sa fiabilité.

De cette manière, un dimensionnement du filtre au pire cas de Doppler et d'étalement de la réponse impulsionnelle du canal n'est plus systématique puisque que l'estimation est adaptée au canal.

Selon une caractéristique particulière, le procédé est remarquable en ce que la ou les caractéristiques du canal de transmission comprennent la fréquence Doppler maximale et/ou l'étalement de la réponse impulsionnelle du canal ("delay spread") maximal.

Ainsi, l'invention permet avantageusement de prendre en compte des caractéristiques importantes du canal présentes notamment dans le cas de communication en provenance et/ou à destination de terminaux mobiles.

Selon une caractéristique particulière, le procédé est remarquable en ce que l'étape de sélection met en oeuvre une sous-étape de tri des séquences sphéroïdales aplaties discrètes bidimensionnelles en fonction d'un critère d'énergie prédéterminé.

Ainsi, l'invention ne considère avantageusement que les SSAD utiles et/ou nécessaires. De cette manière, on limite la complexité de mise en oeuvres tout en conservant une bonne fiabilité de l'estimation de la fonction de transfert.

Selon une caractéristique particulière, le procédé est remarquable en ce que le nombre de séquences sphéroïdales aplaties discrètes bidimensionnelles sélectionnées au cours de l'étape de sélection tient compte d'au moins un critère de qualité d'estimation de la fonction de transfert.

De cette façon avantageuse, l'invention permet d'estimer la fonction de transfert de manière adaptée à la qualité désirée.

Selon une caractéristique particulière, le procédé est remarquable en ce que le nombre de séquences sphéroïdales aplaties discrètes bidimensionnelles sélectionnées au cours de l'étape de sélection est inférieur ou égal au nombre de pilotes du signal.

Selon une caractéristique particulière, le procédé est remarquable en ce qu'au cours de l'étape de détermination, une SSAD bidimensionnelle du jeu est obtenue par produit tensoriel d'au moins deux SSAD monodimensionnelles.

Ainsi, l'invention permet avantageusement d'utiliser des SSAD bidimensionnelle en limitant la complexité, en effectuant une opération judicieuse sur au moins deux SSAD monodimensionnelles. Ceci est notamment possible si on peut considérer que le canal est séparable en temps et en fréquence.

Selon une caractéristique particulière, le procédé est remarquable en ce qu'il met en oeuvre un algorithme d'estimation-maximisation.

Ainsi, si la qualité d'estimation du canal obtenue n'est pas suffisante, l'algorithme d'estimation-maximisation permet avantageusement de l'améliorer.

Selon une caractéristique particulière, le procédé est remarquable en ce qu'il comprend, au cours de l'étape d'écriture, au moins une étape d'estimation d'au moins certains coefficients de la combinaison mettant en oeuvre une méthode des moindres carrés.

L'invention met également en oeuvre un procédé de réception d'un signal numérique, remarquable en ce qu'il met en oeuvre une étape d'estimation d'une fonction de transfert d'un canal de transmission du signal selon le procédé d'estimation de la fonction de transfert d'un canal de transmission d'un signal multiporteuse.

En outre, l'invention concerne un récepteur d'un signal multiporteuse formé d'une succession temporelle de symboles constitués d'un ensemble d'éléments de données, chacun des éléments de données modulant une fréquence porteuse du signal, les éléments de données comprenant d'une part des éléments de référence, appelés pilotes, dont la valeur à l'émission est connue d'au moins un récepteur destiné à effectuer une réception du signal, et d'autre part des éléments de données dits informatifs, représentatifs d'au moins un signal source à transmettre

Le récepteur est remarquable en ce qu'il comprend :

- des moyens de mémorisation d'un jeu de séquences sphéroïdales aplaties discrètes (SSAD) bidimensionnelles ;
- des moyens d'écriture d'une fonction de transfert d'un canal de transmission du signal sous la forme d'une combinaison d'au moins certaines des séquences sphéroïdales aplaties discrètes bidimensionnelles du jeu ;
- des moyens d'interpolation bidimensionnelle en temps et en fréquence d'au moins certains coefficients de la combinaison, de manière à obtenir une estimation de la fonction de transfert en tout point du réseau temps-fréquence.

L'invention concerne aussi une application du procédé d'estimation de la fonction de transfert d'un canal de transmission d'un signal multiporteuse à l'un au moins des domaines suivants :

- la radiodiffusion numérique terrestre ;
- les radiocommunications numériques ;
- la transmission sous-marine de données.

Les avantages du procédé de réception, du récepteur et de l'application du procédé d'estimation sont les mêmes que ceux du procédé d'estimation de la fonction de transfert d'un canal, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre des SSAD bidimensionnelles selon l'invention ;
- la figure 2 illustre des SSAD monodimensionnelles utilisées pour construire les SSAD bidimensionnelles telles qu'illustrées en figure 1;
- la figure 3 illustre la décroissance rapide des valeurs propres d'une SSAD monodimensionnelle de la figure 2;
- la figure 4 représente un schéma synoptique simplifié d'une station émettrice et d'une station réceptrice mettant en oeuvre des SSAD bidimensionnelles telles qu'illustrée en regard de la figure 1 ;
- la figure 5 présente un organigramme mis en oeuvre dans un module d'estimation de canal illustré en figure 4 ;
- la figure 6 illustre un modèle de radio communication connu en soi ;
- la figure 7 illustre le résultat de l'estimation de canal mis en oeuvre dans la figure 5 et appliqué au modèle illustré en figure 6.

Le principe général de l'invention repose sur une technique d'interpolation bidimensionnelle concernant l'estimation par pilotes répartis et plus précisément sur l'utilisation de restrictions de Séquences Sphéroïdales Aplaties Discrètes (SSAD, connues dans la littérature anglaise sous l'acronyme DPSS signifiant « Discrete Prolate Spheroïdal Séquences ») bidimensionnelles, leur nombre étant adapté aux caractéristiques du canal considéré et préférentiellement non figé définitivement en fonction du pire cas de propagation.

L'invention consiste à utiliser des SSAD bidimensionnelles qui peuvent en particulier être utilisées dans le cas où le canal présente un étalement Doppler et des Interférences Entre Symboles (ou IES) (canal délai-Doppler), tel que les systèmes de communications par satellite ou de communications mobiles et ainsi permettre une estimation de canal optimale dans le cas d'un système multiporteuses.

Pour un canal avec étalement de la réponse impulsionnelle et effet Doppler, la fonction de transfert du canal, localement stationnaire, est modélisée par un bruit blanc à bande étroite à deux dimensions (temps et fréquence). Son Spectre de Puissance Doppler bidimensionnel est supposé plat (on n'a aucune information a priori sur le canal de propagation), ce qui englobe tous les cas possibles d'étalement de Doppler et d'étalement en temps.

La fenêtre d'estimation a une taille limitée et le nombre des SSAD bidimensionnelles utilisées est adapté en fonction de la taille de la fenêtre d'estimation.

Dans ces conditions, l'utilisation des SSAD bidimensionnelles permet d'obtenir une estimation de canal de qualité, tout en optimisant le nombre de pilotes et ce pour une complexité de mise en oeuvre raisonnable. Cette technique d'estimation consiste à interpoler l'estimation des coefficients de la décomposition du canal discret, obtenu par les symboles pilotes, sur la base des SSAD bidimensionnelles.

Plus précisément, dans le cas bidimensionnel, objet de la présente invention, la fonction de transfert variable du canal est modélisée par un bruit à bande étroite bidimensionnel. Le récepteur possédant généralement une connaissance incomplète des caractéristiques de son oscillateur local et de celles du spectre délai-Doppler du canal, bidimensionnel, ce dernier est supposé plat, à support borné, de largeur égale à l'étalement Doppler $B_D$ sur l'axe fréquentiel et au retard maximum $T_{max}$ sur l'axe temporel. Il est donc modélisé par un parallélépipède, correspondant au plus petit parallélépipède englobant le support réel. Ce modèle inclut donc tous les cas possibles de délai et de Doppler.

La fonction d'autocorrélation de $T(f, t)$, pour le spectre de puissance Doppler défini précédemment, est séparable en temps et en fréquence sous la forme:

$$R_T\left(\Delta f, \Delta t\right) \overset{\Delta}{=} E\left[T(f,t)T^*(f+\Delta f, t+\Delta t)\right] = N_c \, \mathrm{sinc}\left(\pi \, \Delta f \, T_{max}\right)\mathrm{sinc}\left(2\pi \, \Delta t . f_D\right)$$

où $T_{max}$ correspond à l'étalement maximal, $2f_D$ à l'étalement Doppler, $f$ à une fréquence, $\Delta f$ à une variation de fréquence, $t$ à un temps, $\Delta t$ à une variation de temps et sinc à la fonction sinus cardinal.

On considère un bloc de dimension $N_1 x N_2$, $N_1$ (nombre de symboles temporels, par exemple égal à 25) correspondant à la dimension temporelle et $N_2$ (nombre de sous-porteuses, par exemple égal à 35) à la dimension fréquentielle. Les paramètres $N_1$ et $N_2$ sont prédéterminés en fonction d'une complexité donnée et/ou en fonction d'un compromis entre la complexité et la fiabilité recherchée de l'estimation. Les SSAD utilisées sont des fonctions bidimensionnelles définies sur l'espace produit $C^{N1} x C^{N2}$, $C^{N1}$ correspondant à l'espace complexe temporel à $N_1$ dimensions et $C^{N2}$ à l'espace fréquentiel à $N_2$ dimensions.

Grâce au caractère séparable en temps et en fréquence du canal, ces SSAD bidimensionnelles sont définies comme le produit tensoriel de SSAD monodimensionnelles.

En effet, ainsi définies, les SSAD 2D (c'est-à-dire bidimensionnelles) permettent d'obtenir des coefficients de décomposition du canal décorrélés :

Soit $\underline{\underline{R_c}}$ le tenseur de covariance du canal, défini par :

$$\underline{\underline{R_c}} \overset{\Delta}{=} \left\{E\left[c_{ij}.c_{kl}^*\right]\right\}_{ijkl}$$

avec :

- $i$ et $k$ étant prises de 1 à $N_1$ et $j$ et $l$ étant prises de 1 à $N_2$ ;
- $c_{kl}^*$ représentant le conjugué de la valeur complexe $c_{kl}$;
- la fonction E[$x$] représentant l'espérance ou la moyenne de la variable $x$ ; et
- le vecteur complexe $\underline{c}$ à estimer représentant ici une réalisation du canal discret bidimensionnel au niveau du train de données émis, et étant composé de $N_1.N_2$ coefficients complexes $c_{ij}$.

Le canal est séparable, ce qui revient à écrire que le tenseur $\underline{\underline{R_c}}$ est le produit tensoriel des matrices de covariance correspondant à chacune des dimensions temps et fréquence:

$$\underline{\underline{R}}_c = \left\{ N_c \, \text{sinc}\big(\pi \, (j-l)\nu_0.T_{\max}\big)\text{sinc}\big(2\pi \, (i-k)\tau_0.f_D\big)\right\}_{ijkl} = N_c \underline{\underline{R}}^{(1)} \otimes \underline{\underline{R}}^{(2)}$$

où

- $\underline{R}^{(1)} = \{\sin c(\pi(j\text{-}l)\nu_0.T_{max}\}_{jl}$; et où
- $\underline{R}^{(2)} = \{\text{sinc}(2\pi(i\text{-}k)\tau_0.f_D\}_{ik}$.

Les coefficients de la décomposition du canal discret sur la base des SSAD-2D sont donc décorrélés.

On peut démontrer que les SSAD-2D ainsi construites sont bien les vecteurs propres du tenseur de covariance d'ordre 4 du canal bidimensionnel.

Il est possible de trouver une base orthonormée de l'espace complexe à $N_1.N_2$ dimensions $C^{N1.N2}$, dont les vecteurs normalisés

$$\left\{ \underline{\underline{p}}^{(i,j)} \right\}, \; i$$

$i = 1..N_1$ et $j = 1..N_2$ (la notation $x = a..b$ signifiant que les valeurs de $x$ sont prises de $a$ à $b$) sont les vecteurs propres du tenseur de covariance.

La famille de SSAD bidimensionnelles est donc la famille

$$\left\{ \left( \underline{\underline{p}}^{(i,j)}, \lambda^{(1,i)}\lambda^{(2,j)} \right) \right\}_{i=1 \;\; j=1}^{N_1 \;\; N_2}$$

où :

- les SSAD bidimensionnelles orthonormées sont les matrices

$$\underline{\underline{p}}^{(i,j)} = \left\{ \left( p_k^{(1,i)}.p_l^{(2,j)} \right) \right\}_{k=1 \;\; l=1}^{N_1 \;\; N_2}$$

- et les valeurs propres associées sont : $\lambda^{(1,i)}, \lambda^{(2,j)}$

avec :

$$\left\{ \left( \underline{p}^{(1,i)}, \lambda^{(1,i)} \right) \right\}_{i=1}^{N_1} \;\; \text{et} \;\; \left\{ \left( \underline{p}^{(2,j)}, \lambda^{(1,j)} \right) \right\}_{j=1}^{N_2}$$

deux familles de SSAD monodimensionnelles sur les dimensions respectivement temporelle et fréquentielle, et leurs valeurs propres associées.

Les séquences

$$\left\{ \underline{p}^{(1,\hat{i})} \right\}_{i=1}^{\hat{N}_1} \; \text{s}$$

sont des séquences temporelles de taille $N_1$ à bande normalisée limitée $[-W_pW_l]$ et les séquences

$$\left\{\underline{p}^{(2,j)}\right\}_{j=1}^{N2} \; s$$

sont des séquences fréquentielles de taille $N_2$ à bande limitée normalisée $[0 \; ; \; 2W_f]$, avec

$$W_t = f_D \times \tau_0 \text{ et } W_f = \frac{T_{max} \times \nu_0}{2}$$

Les vecteurs correspondant à la dimension temporelle sont égaux à la restriction des $N_1$ SSAD, séquences réelles discrètes temporelles de dimension $N_1$ et à bande limitée normalisée $[-W_t;W_t]$ les plus concentrées sur l'intervalle discret

$$n\,{}_{n=0}^{N_1-1},$$

correspondant à la restriction au support temporel du bloc transmis. Les SSAD les plus concentrées sont par définition les SSAD possédant les plus grandes énergies sur l'intervalle considéré.

De même, les vecteurs correspondant à la dimension fréquentielle sont égaux à la restriction des $N_2$ SSAD, séquences réelles discrètes fréquentielles de dimension $N_2$ et à bande limitée normalisée $[0 \; ; \; 2W_f]$ les plus concentrées sur l'intervalle discret

$$n\,{}_{n=0}^{N_2-1},$$

correspondant à la restriction au support fréquentiel du bloc transmis.

Les coefficients de la décomposition du canal discret bidimensionnel sont alors donnés par :

$$\underline{c} = \sum_{i=1}^{N_1} \sum_{j=1}^{N_2} b_{ij}\, \underline{p}^{(i,j)}$$

Pour des raisons de clarté, on utilise dorénavant un indexage simple: On a alors :

$$\underline{c} = \sum_{i} b_i\, \underline{p}^{(i)}$$

Le choix de bonnes fonctions monodimensionnelles permet donc de construire de bonnes fonctions d'interpolation bidimensionnelles.

Seules les SSAD les plus concentrées sont nécessaires pour décrire le canal. On ne garde que les N' SSAD-2D les plus concentrées pour interpoler le canal.

Selon le mode préféré de réalisation, on obtient les $N'$ SSAD-2D les plus concentrées en calculant les $N_1$ (respectivement $N_2$) valeurs propres $\lambda^{(1,i)}$ (respectivement $\lambda^{(2,i)}$) dans la dimension temporelle (respectivement fréquentielle) puis en sélectionnant les $N'$ valeurs les plus élevées des produits $\lambda_{ij} = \lambda^{(1,i)}.\lambda^{(2,j)}$.

Selon une variante moins complexe mais donnant une moins bonne estimation (pour un nombre donné de SSAD 2D sélectionnées) que le mode préféré de réalisation, on simplifie la sélection en sélectionnant d'abord les $N'_1$ valeurs les plus élevées pour $\lambda^{(1,i)}$ et les $N'_2$ valeurs les plus élevées pour $\lambda^{(2,j)}$ pour obtenir $N'$ (égal ici à $N'_1.N'_2$) valeurs donnant les SSAD-2D les plus concentrées.

L'estimation du canal correspond donc à :

$$\hat{\underline{c}}^{(N')} = \underline{c} + \underline{n}_c$$

où $\underline{n}_c$ est le bruit d'estimation.

Par analogie avec le rapport signal à bruit, on définit le critère de qualité de l'estimation suivant :

$$Q(N') = \frac{E\left[\left\|\underline{\underline{c}}\right\|^2\right]}{E\left[\left\|\underline{\underline{n}}_c\right\|^2\right]}$$

où $\|.\|$ définit la norme d'une matrice.

On peut donc écrire :

$$Q(N') = \frac{\sum Valeurs\ propres\ de\ toutes\ les\ SSAD}{\sum Valeurs\ propres\ des\ SSAD\ rejetées}$$

A la première étape de l'algorithme d'estimation, les coefficients sont obtenus en projetant les symboles de référence sur les SSAD conservées. Toutes les SSAD n'ayant pas été conservées pour estimer le canal, ces projections donnent une approximation, de qualité acceptable, de la décomposition du canal.

Dans un mode préféré de réalisation, on se restreint à la projection des symboles de référence sur les SSAD conservées sans mettre en oeuvre un algorithme EM (Estimation - Maximisation) décrit plus loin.

Néanmoins, en variante, afin d'optimiser l'estimation de canal pour des motifs arbitraires de synchronisation et en tenant compte de la totalité ou d'une partie de la structure codée des données émises, on met en oeuvre un algorithme d'estimation-maximation de façon similaire à celle exposée dans le brevet FR 2 747 870 (au nom des mêmes déposants et ayant pour titre «Signal Numérique à blocs de référence multiples pour l'estimation de canal, procédés d'estimation de canal et récepteurs correspondants »). De cette manière, on met à contribution non seulement les sous-porteuses de référence, mais également les porteuses utiles, afin d'améliorer la qualité de l'estimateur au sens du critère de maximum de probabilité a posteriori (MAP).

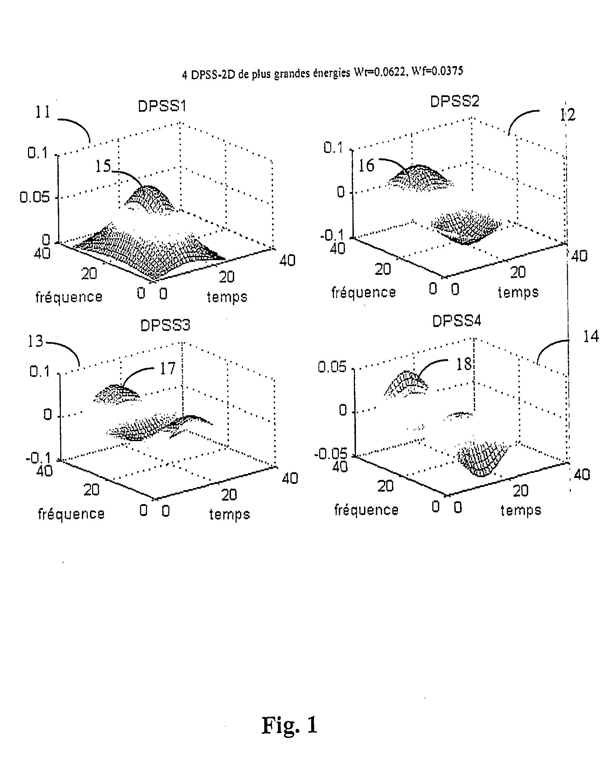

A titre d'illustration, la figure 1 représente des SSAD 15 à 18 sur des graphiques 11 à 14. On considère ici, par exemple, le cas d'un modèle de type « Vehicular B à 250km/h », où $f_D$ est proche de 930 Hz, $T_{max}$ vaut 20 µs, $\tau_0$ est égal à 133,33 µs et $\upsilon_0$ à 3,75kHz. On en déduit que le temps est limité à un intervalle *[-Wt,+Wt]* où *Wt* est égal à 0,0622 et que les fréquences sont limitées à un intervalle [0,+2Wf] où *Wf* est égal à 0,0375. Selon un exemple considéré, on a choisi ici de représenter les quatre SSAD bidimensionnelles de plus haute énergie (l'énergie d'une SSAD étant égale au produit des valeurs propres des deux SSAD 1D correspondantes soit $\lambda^{(1,i)}.\lambda^{(2,j)}$) selon leur amplitude (axe vertical) en fonction du temps et de la fréquence (axes horizontaux) (alors qu'en fait, on a, par exemple, conservé les 25 SSAD bidimensionnelles de plus haute énergie pour estimer le canal).

L'obtention des familles SSAD monodimensionnelles va maintenant être détaillée.

Considérons le cas de la dimension temporelle (le cas de la dimension fréquentielle étant tout à fait similaire).

Le vecteur complexe $\underline{c}$ correspondant à la dimension temporelle à estimer ici, représentant une réalisation du canal discret au niveau du train de données émis, est composé de $N$ (égal à $N_1$) coefficients complexes $c_n$.

Il est possible de trouver une base orthonormée de l'espace complexe à N dimensions $C^N$, dont les vecteurs normalisés $\{\underline{p}^{(i)}\}$, i = 1..N sont les vecteurs propres de la matrice de covariance de $\underline{c}$ associés aux valeurs propres $\{\lambda_i\}$, i = 1..N.

Le spectre Doppler du canal ce dernier est supposé plat, à support borné, de largeur égale à l'étalement Doppler $B_D = 2f_D$, $f_D$ représentant la fréquence Doppler maximale.

Ces vecteurs sont égaux dans ce cas à la restriction des $N$ SSAD, séquences réelles discrètes de dimension $N$ et à bande limitée normalisée *[-W';W']* où $W' = W_t = f_D \times \tau_0$ les plus concentrées sur l'intervalle discret $\{n\}_{n=0}^{N-1}$, correspondant à la restriction au support temporel du bloc transmis. Les SSAD les plus concentrées sont par définition les SSAD possédant les plus grandes énergies sur l'intervalle considéré. Ainsi, on ne conserve que les N SSAD possédant la plus grande énergie et on écarte les autres.

En d'autres termes.

$$\underline{c} = \sum_{i=1}^{N} b_i\ \underline{p}^{(i)}$$

où les facteurs $b_i$ sont des variables aléatoires gaussiennes complexes indépendantes vérifiant les relations suivantes :

- la variance des variables $b_i$ vaut $\lambda_2$ :

$$E[|b_i|^2] = \lambda_i \qquad\qquad\qquad \text{(relation (1))}$$

- la covariance entre $b_i$ et $b_j$, $i$ et $j$ étant différents est nulle :

$$E[b_i.b_j{}^*] = 0 \text{ si } i \neq j$$

où la variable $b_j{}^*$ est le conjugué de la variable complexe $b_j$

Les vecteurs de base (c'est-à-dire les SSAD que l'on a conservées) sont donnés par la relation :

$$E[\underline{c}.\underline{c}^H].\underline{p}^{(i)} = \lambda_i p^{(i)}$$

où $(.)^H$ est l'opérateur de transposition-conjugaison du vecteur (.).
Les vecteurs $\{\underline{p}^{(i)}\}$, $i = 1..N$ vérifient le système d'équations suivant:

$$2W' \sum_{j=1}^{N} \sin c(2W'(n-j)) p_j^{(i)} = \lambda_i \, \underline{p}_n^{(i)} \qquad n = 1...N$$

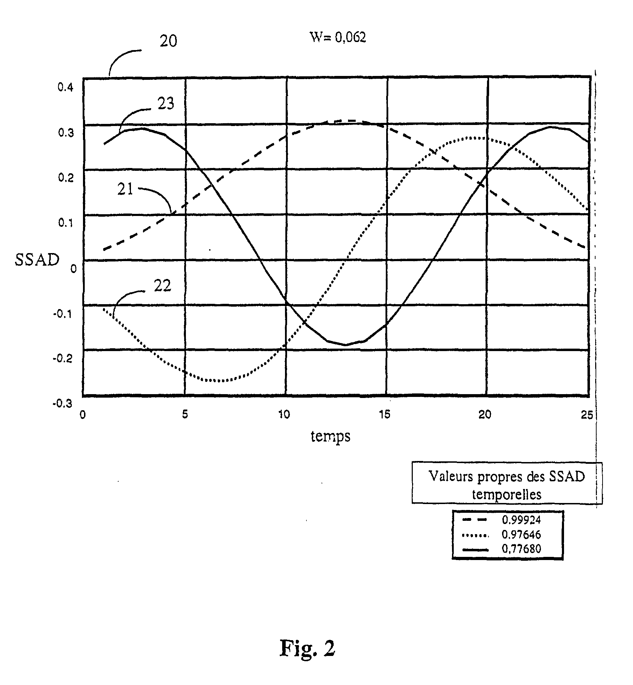

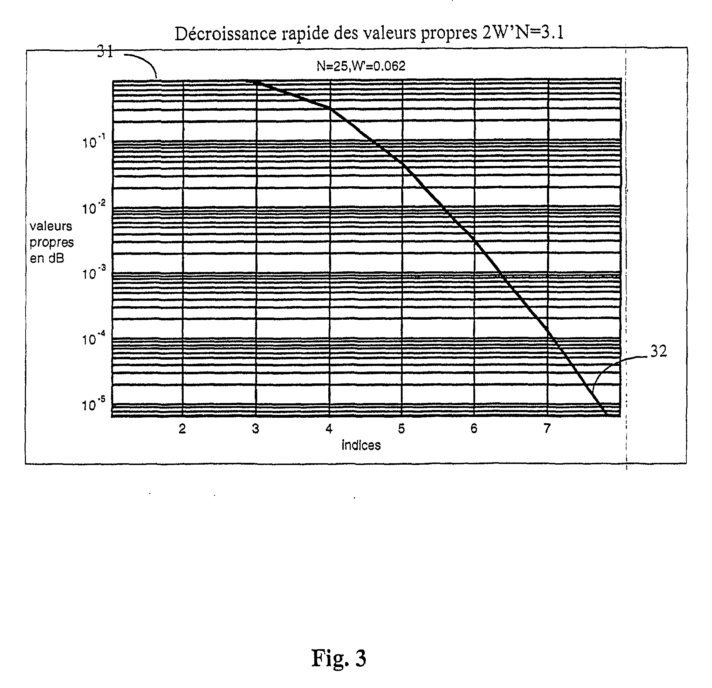

ce qui correspond à la définition même des SSAD monodimensionnelles de taille $N$ et à bande normalisée $[-W'; W']$.
A titre d'illustration, la figure 2 donne un exemple de SSAD monodimensionnelles. Selon cet exemple, on a sélectionné les 25 ($N$ vaut 25) SSAD de plus grande énergie. Sur le graphique 20, on a choisi de représenter les trois SSAD 21, 22 et 23 de plus grande énergie dont l'amplitude (axe des ordonnées) est donnée en fonction du temps (axe des abscisses dont l'échelle est en unités normalisées, c'est-à-dire en nombre de temps symbole). La concentration ou l'énergie des SSAD dépend des valeurs propres : plus le module d'une valeur propre correspondant à une SSAD est grand, plus l'énergie de la SSAD correspondante l'est aussi. On note que les trois SSAD 21, 22 et 23 rangées par ordre décroissant d'énergie correspondent à trois valeurs propres égales respectivement à 0,99924, 0,97646 et 0,77680 (qui sont donc elles aussi classées par ordre décroissant).
La concentration d'une SSAD étant égale à la $n^{\text{ième}}$ valeur propre $\lambda_n$ de la matrice de covariance de $\underline{c}$, la relation (1) montre que seules les SSAD les plus concentrées sont nécessaires pour décrire le canal.
On suppose que ces valeurs propres sont rangées dans un ordre décroissant. Dans l'article « Prolate Spheroïdal Wave Function, Fourier Analysis and Uncertainty-I» écrit par D. SLEPIAN et H. O. POLLAK publié dans la revue « The Bell System Technical Journal » paru en janvier 1961 , on démontre que ces valeurs propres présentent une décroissance très raide et s'évanouissent rapidement, après un nombre de $2W'N$ valeurs. On note que selon l'exemple illustré en figure 3, le produit $2W'N$ vaut 3,1 pour une valeur de $W'$ et $N$ égales respectivement à 0,062 et qu'effectivement les valeurs propres exprimées en dB (c'est-à-dire suivant une échelle de type $10Log(\lambda^2/\lambda_0{}^2)$ où $\lambda$ représente une valeur considérée et $\lambda_0$ correspond à la valeur propre la plus grande) décroissent très vite après ce seuil égal à 3,1.
La famille des SSAD est orthogonale. Cependant, rien n'assure l'orthogonalité des SSAD sous-échantillonnées. La projection des symboles de référence sur ces SSAD donne donc une approximation de la décomposition du canal.
Les trois étapes effectuées lors de l'estimation de canal sont :

- le récepteur calcule, à partir de N' symboles de référence du bloc modulé, les coefficients $d_i$ correspondant à la décomposition du canal sur la famille réduite de $N'$ SSAD. Du fait de la présence d'un bruit additif, on applique au résultat obtenu des coefficients de pondération $w_i$ suivants :

$$w_i = \frac{\lambda_i}{\lambda_i + \dfrac{N_0}{N_c E_s}}$$

$N_c$ (respectivement $N_0$) étant la variance du canal (respectivement du bruit additif) et $E_s$ l'énergie des symboles de référence transmis. On obtient alors comme estimation des coefficients de la décomposition :

$$\hat{b}_i = w_i \, d_i \; i = 1...N'$$

- Pour améliorer les estimations obtenues, on utilise l'algorithme EM (Estimation-Maximisation). L'indépendance des coefficients $b_i$ permettant de simplifier les calculs de l'étape de maximisation Pour améliorer les estimations obtenues, l'algorithme EM détaillé dans le brevet FR 27 47870 cité précédemment met à contribution non seulement les sous-porteuses de référence, mais également les porteuses utiles, afin d'améliorer la qualité de l'estimateur au sens du critère de maximum de probabilité a posteriori (MAP).
- Le récepteur détermine alors une estimation du canal en procédant à une interpolation par les SSAD conservées.

Le lecteur pourra se référer au brevet FR 27 47870 cité précédemment, pour plus de détails sur la mise en oeuvre des SSAD monodimensionnelles.

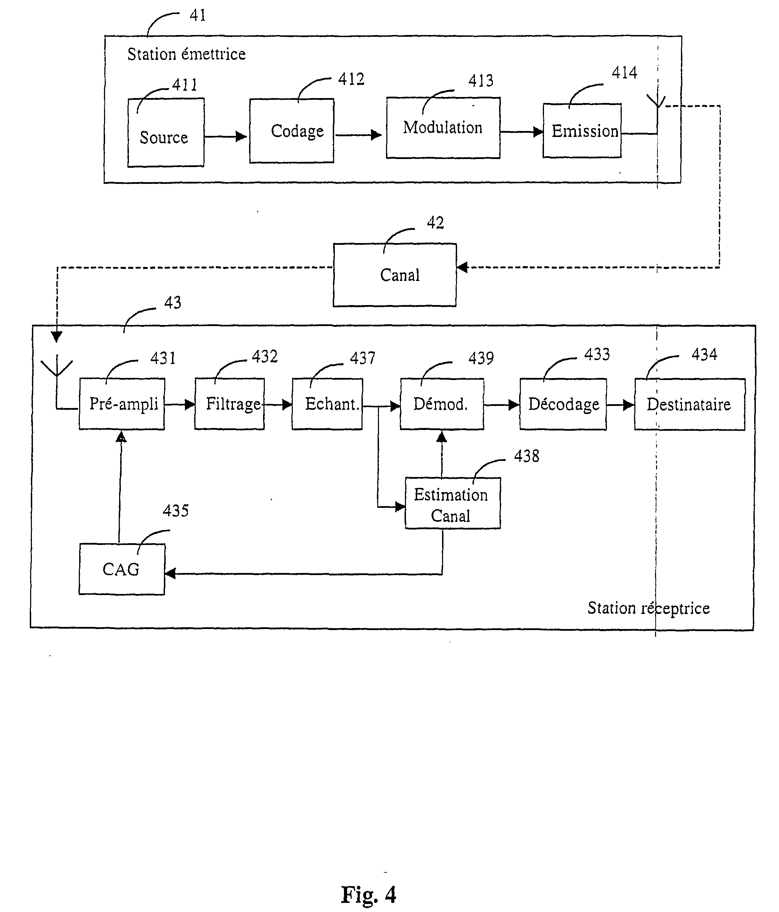

On présente, en relation avec la figure 4, un mode de réalisation de l'estimation de canal selon l'invention.

La figure 4 représente sous forme d'un schéma simplifié notamment :

- une station émettrice 41 d'un signal formé de train de données modulées selon l'invention ;
- un canal de transmission 42 du signal émis; et
- une station réceptrice 43 du signal émis mettant en oeuvre notamment une estimation de canal selon l'invention.

La station émettrice 41 comprend notamment une source d'information 411 de débit arbitraire générant des données binaires ou non correspondant à des signaux source de type quelconque (sons, images, donnée, ...). Ces données sont éventuellement soumises à un codage de source et de canal 412. Le codage de canal met en oeuvre un code correcteur d'erreur adapté au canal de transmission 42.

Les données codées générées à partir de ces codes (symboles utiles) sont ensuite organisées en trains de données, et modulées (413). Elles sont donc convenablement réparties et entrelacées sur plusieurs trains de données afin d'apporter la diversité nécessaire et de décorréler l'évanouissement affectant les symboles transmis. Des éléments de référence sont également introduits dans chaque train de données, selon les principes de répartition précisés par la suite. Enfin les données sont modulées selon une modulation de type OFDM/QAM (de l'anglais « Quadrature Amplitude Modulation ») (par exemple, OFDM avec intervalle de garde) ou OFDM/OQAM (de l'anglais « Offset Quadrature Amplitude Modulation ») (par exemple, la modulation IOTA). On note que des symboles de référence sont insérés dans le bloc à transmettre après le « map ing » et avant le modulateur OFDM. Ces symboles sont régulièrement répartis dans le plan temps-fréquence. On pourra se référer aux brevets FR 2 601 210 et FR 2 733 869 pour une description détaillée du système de modulation.

Le signal est alors transposé en fréquence, amplifié et émis par l'émetteur 414 à travers le canal 42.

Le canal 42 est un canal de transmission radio quelconque. Par passage dans le canal 42, le signal est par exemple bruité et soumis à des chemins multiples, à des interférences, à de l'effet Doppler.

L'homme du métier des transmissions sans fil modélise généralement le canal afin d'optimiser notamment le codage/décodage et la modulation/démodulation.

Ici, selon un modèle de ce canal, on considère que le canal est soumis :

- à un bruit blanc Gaussien caractérisé par un rapport Signal/Bruit ou SNR (de l'anglais Signal/Noise Ratio) supposé connu;
- à de l'effet Doppler dont le spectre de puissance est normalisé par un parallélépipède de demie-bandes normalisées $Wt$ et $Wf$ et
- à un étalement de la réponse impulsionnelle (liés notamment aux trajets multiples résultant de réflexions du signal sur des éléments d'environnement (par exemple immeubles)).

Certains de ces modèles sont normalisés. On pourra considérer par exemple que le canal 42 peut être modélisé selon le type "Vehicular B" à 250 Km/h décrit dans le rapport ETSI de référence "TR 101 112 V3.2.0 Annexe B. 1 ETSI" qui est typique d'un canal entre une station fixe et un véhicule se déplaçant à une vitesse égale à 250 km/h.

Dans la station réceptrice 43, les étages d'entrée sont conventionnels. La station réceptrice 43 reçoit le signal émis par la station émettrice 41 et transmis à travers le canal 42. Le signal correspondant à un train de données reçu est préamplifié 431, puis converti en fréquence intermédiaire afin de réaliser le filtrage adapté de canal 432. Le signal en fréquence intermédiaire est ensuite converti en bande de base sur deux voies en quadrature, puis échantillonné (437).

Les échantillons correspondant à un train de données sont utilisés Par le récepteur pour déterminer une estimation 438 détaillée par la suite.

Cette estimation permet une démodulation 439 des échantillons, fiable.

Les données démodulées sont ensuite décodées, éventuellement dé-entrelacées pour être remises au destinataire 434.

En outre, l'estimation du canal permet la correction automatique de gain (CAG) 435, qui contrôle la préamplication 431.

On a supposé ici que les trains de données sont courts. Une synchronisation n'est pas nécessaire. En variante, pour des trains de données longs, une synchronisation prenant en compte les échantillons permet de se synchroniser correctement sur les symboles transmis et/ou le train de données lui même pour échantillonner correctement le signal reçu.

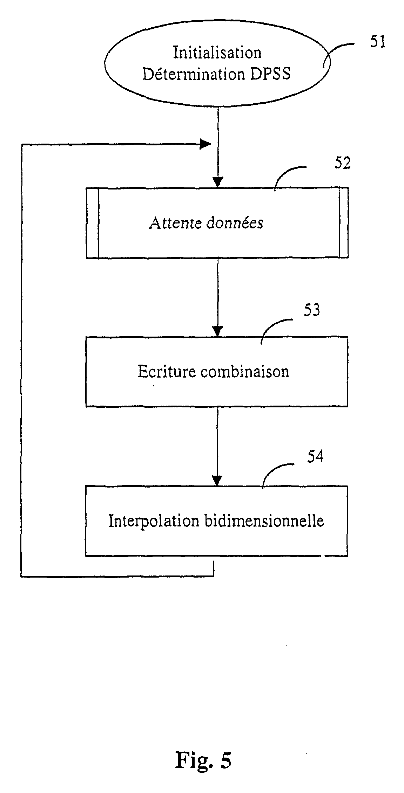

L'estimation de canal 438 selon l'invention va maintenant être détaillée selon l'organigramme décrit en figure 5.

Au cours d'une étape d'initialisation 51, on détermine les SSAD bidimensionnelles adaptées au type de canal utilisé selon la méthode qui suit.

On suppose que les paramètres du système (c'est-à-dire le temps symbole $\tau_0$ et l'espacement entre sous-porteuses $v_0$) aient été choisis de telle sorte que le canal 42 puisse être considéré comme quasi-constant à l'échelle d'une maille OFDM $(\tau_0, v_0)$ (une maille OFDM correspond à la surface de dimension $\tau_0$ en temps et $v_0$ en fréquence du réseau temps-fréquence), à savoir :

$$\begin{cases} v_0 << \dfrac{1}{T_{Max}} = B_c \\[2ex] \tau_0 << \dfrac{1}{2f_D} = T_c \end{cases}$$

où

- Bc représente la bande de cohérence du canal ; et
- Tc le temps de cohérence du canal.
  (le symbole « << » signifiant « est très inférieur à »)

Le canal se comporte alors comme un canal multiplicatif, caractérisé par une amplitude et une phase, correspondant à la valeur de $T(f,t)$, fonction de transfert variable du canal, pour l'instant et la fréquence considérée.

Pour la maille correspondant à un symbole transmis $a_{m,n}$, on a donc :

- $T(f,t) = T(mv_0, n\tau_0)$ et
- $\tau(mv_0, n\tau_0) = \rho_{m,n} e^{i\theta_{m,n}}$

où $\rho$ représente une amplitude et $\theta$ une phase.

Soit la notation matricielle suivante :

- 

$$\underline{\underline{a}} \stackrel{\Delta}{=} \left\{a_{m,n}\right\}_{m,n}$$

matrice des symboles binaires émis

- 

$$\underline{\underline{r}} \stackrel{\Delta}{=} \left\{r_{m,n}\right\}_{m,n}$$

matrice des échantillons reçus en sortie du démodulateur

-

$$\underline{c} \overset{\Delta}{=} \left\{ T(m\nu_0, n\tau_0) \right\}_{m,n}$$

matrice des coefficients du canal discret

-

$$\underline{\underline{n}} \overset{\Delta}{=} \left\{ c_{m,n} \right\}_{m,n}$$

matrice des coefficients du bruit blanc additif gaussien complexe discret

le canal discret est modélisé par la relation :

$$\underline{r} = \underline{c} \cdot \underline{a} + \underline{n}$$

où l'opérateur « • » représente le produit terme à terme.

Soit de manière équivalente, le canal étant localement assimilé à un canal multiplicatif :

$$r_{m,n} = c_{m,n} a_{m,n} + n_{m,n}$$

Il s'agit de déterminer les valeurs $c_{m,n}$.

On rappelle que des symboles de référence sont insérés dans le bloc à transmettre avant le modulateur OFDM et que ces symboles sont régulièrement répartis dans le plan temps-fréquence.

Les caractéristiques du canal de propagation, à savoir étalement Doppler maximal (bilatéral) et délai maximal (unilatéral) sont supposés connus (on peut, par exemple, estimer ces valeurs selon un modèle du canal et/ou les mesurer).

On suppose que le Spectre de Puissance Doppler du canal est modélisé par un parallélépipède de demie-bandes normalisées $W_t$ et $W_f$ (comme précisé dans la description du principe général de l'invention) :

$$W_t = f_D \times \tau_0$$

et

$$W_f = \frac{T_{max} \times \nu_0}{2}$$

On pré-calcule des SSAD monodimensionnelles correspondant à ces bandes normalisées :

- Selon la dimension temporelle :

Soit $R(N, W_t)$ la matrice de covariance de dimension $N$ (correspondant à la dimension temporelle du bloc traité) d'un bruit blanc complexe de bande normalisées $2W_t$,

$$R_{m,n} = 2W_t \sin(2\pi W_t (m-n))$$

Les SSAD 1D (c'est-à-dire à une dimension) correspondant à la dimension temporelle sont définies comme étant des vecteurs propres normalisés de la matrice $R(N, W_t)$, ordonnés selon l'ordre croissant de leurs valeurs propres.

- Selon la dimension fréquentielle :

On procède de manière analogue :

Soit $R(N, W_f)$ la matrice de covariance de dimension $N$ (correspondant à la dimension fréquentielle du bloc traité) d'un bruit blanc complexe de bande normalisées $2W_f$,

$$R_{m,n} = 2W_f \sin(2\pi W_f(m-n))$$

Les SSAD 1D correspondant à la dimension fréquentielle sont définies comme étant des vecteurs propres normalisés de la matrice $R(N,W_f)$, ordonnés selon l'ordre croissant de leurs valeurs propres.

On construit alors les SSAD 2D (c'est-à-dire à deux dimensions) par multiplication terme à terme de SSAD 1D correspondant à une dimension temporelle et d'une SSAD 1D correspondant à une dimension fréquentielle:

- $P_{i,j} = P_i P_j^T$ ; et
- $\lambda_{i,j} = \lambda_i . \lambda_j$.

où :

- $P_{i,j}$ définit une SSAD bidimensionnelle de valeurs propres $\lambda_{i,j}$,
- $P_i$ et $P_j$ correspondant à des SSAD monodimensionnelles de valeurs propres respectives $\lambda_i$ et $\lambda_j$ (notations simplifiées pour une plus grande lisibilité).

Parmi les SSAD obtenues, on sélectionne les SSAD de plus grandes énergies.

Selon un premier mode de réalisation, le nombre, $N'$, de SSAD 2D retenues est prédéterminé et est, par exemple, de l'ordre de 25.

Selon un second mode de réalisation, le nombre, $N'$, de SSAD 2D retenues est tel que le facteur de qualité défini comme le rapport de la sommes des valeurs propres sur la somme des valeurs propres rejetées est supérieur à un facteur de qualité donné $Q_0$ (par exemple, de l'ordre de 30dB). En résumé, le nombre $N'$ est déterminé par le critère :

$$Q = \frac{\sum toutes\ les\ valeurs\ propres}{\sum valeurs\ propres\ rejetées} > Q_0$$

Ainsi, pour un bloc temps-fréquence de taille donnée et des caractéristiques données du canal de propagation, on génère le nombre de SSAD bidimensionnelles nécessaires à l'interpolation du gain complexe du canal à partir de l'estimation de ce gain complexe obtenues aux emplacements des symboles pilotes.

Ainsi, au cours de l'étape d'initialisation 51, on stocke dans le module d'estimation de canal 438 de la station réceptrice les paramètres des SSAD bidimensionnelles retenues.

On note que les SSAD bidimensionnelles peuvent être retenues lors de la conception du module d'estimation de canal 438 et utilisées de manière statique lors d'une estimation de canal.

Selon une variante plus complexe (la complexité restant raisonnable, de par le mode de construction des SSAD 2D obtenues par produit tensoriel de deux SSAD 1D), les SSAD 2D sont déterminées de manière dynamique par le module d'estimation de canal 438.

Selon cette variante, on choisit les SSAD-2D à utiliser en fonction des caractéristiques du canal de propagation (notamment le délai maximum de propagation mesuré à partir du temps s'écoulant entre la réception d'un premier symbole et le dernier écho correspondant à ce symbole).

Puis, au cours d'une étape 52, la station réceptrice 43 attend puis reçoit des blocs de données à démoduler. Ce bloc comprend notamment des pilotes qui vont permettre l'estimation de canal.

Puis, au cours d'une étape 53 d'écriture de combinaison, on effectue une projection des pilotes sur les SSAD bidimensionnelles retenues.

Pour réaliser cette projection, on calcule tout d'abord les coefficients $(d_i)_{i=1,...,K}$ de la décomposition du canal dans l'espace des SSAD 2D conservées à partir des symboles de référence $(a_i)_{i=1,...,K}$ transmis:

$$\begin{bmatrix} d_1 \\ \cdot \\ \cdot \\ d_{N'} \end{bmatrix} = \begin{bmatrix} p_1 & \cdot & \cdot & p_{N'} \end{bmatrix}^{\#} \begin{bmatrix} a_1 \\ \cdot \\ \cdot \\ a_K \end{bmatrix}$$

où:

- $N'$ est le nombre de SSAD retenues ;
- $K$ le nombre de pilotes;
- $p$ correspond à une SSAD 2D ($N'$ SSAD 2D conservées) et $p^{\#}$ est sa pseudo-inverse soit encore :

$$\begin{bmatrix} a_1 \\ \cdot \\ \cdot \\ a_K \end{bmatrix} = \begin{bmatrix} p_1 & \cdot & \cdot & p_{N'} \end{bmatrix} \cdot \begin{bmatrix} d_1 \\ \cdot \\ \cdot \\ d_{N'} \end{bmatrix}$$

Le nombre $K$ de symboles pilotes utilisés doit être supérieur ou égal au nombre $N'$ de SSAD conservées. On rappelle que $p_{i(1 \leq i \leq N')}$ est une SSAD 2D, soit un vecteur de dimension $K$. Donc, comme $K$ est supérieur ou égal à $N'$, on obtient autant de coefficients $d_i$ de la décomposition du canal qu'il y a de SSAD 2D.

Les pseudo-inverses sont stockées dans une mémoire non volatile (ROM) de la station réceptrice, pour chaque taille de blocs traités (on définit généralement une taille de fenêtre d'estimation correspondant à la taille du plus petit bloc pouvant être transmis) et chaque environnement de propagation.

Le canal étant bruité et le SNR (rapport Signal/Bruit) étant supposé connu, on obtient une estimation des coefficients $(a_i)_{i=1,...,K}$ de la décomposition du canal dans l'espace des SSAD 2D par la méthode des moindre carrés (MMC)

$$\hat{a}_i = \frac{\lambda_i}{\lambda_i + \dfrac{N_0}{E_s}} d_i$$

- $\lambda_i$ étant la valeur propre de la $i^{\text{ème}}$ SSAD 2D;
- $N_0$ la variance du bruit; et
- $E_s$ l'énergie des pilotes à la réception.

L'estimation du canal $\hat{C}$ est alors donnée par l'équation:

$$\hat{C} = \begin{bmatrix} p_1 \cdots \cdots p_{N'} \end{bmatrix}^{\#} \begin{bmatrix} \hat{a}_1 \\ \\ \hat{a}_K \end{bmatrix}$$

Ensuite, au cours d'une étape 54, le module d'estimation de canal 438 effectue une estimation de la fonction de transfert du canal par interpolation de l'estimation effectuée sur les pilotes. En effet, les symboles pilotes, connus du récepteur permettent d'obtenir une décomposition du canal discret sur la base des SSAD 2D. Par transposition dans la base de temps, on obtient alors la connaissance du canal en tout point du réseau temps-fréquence.

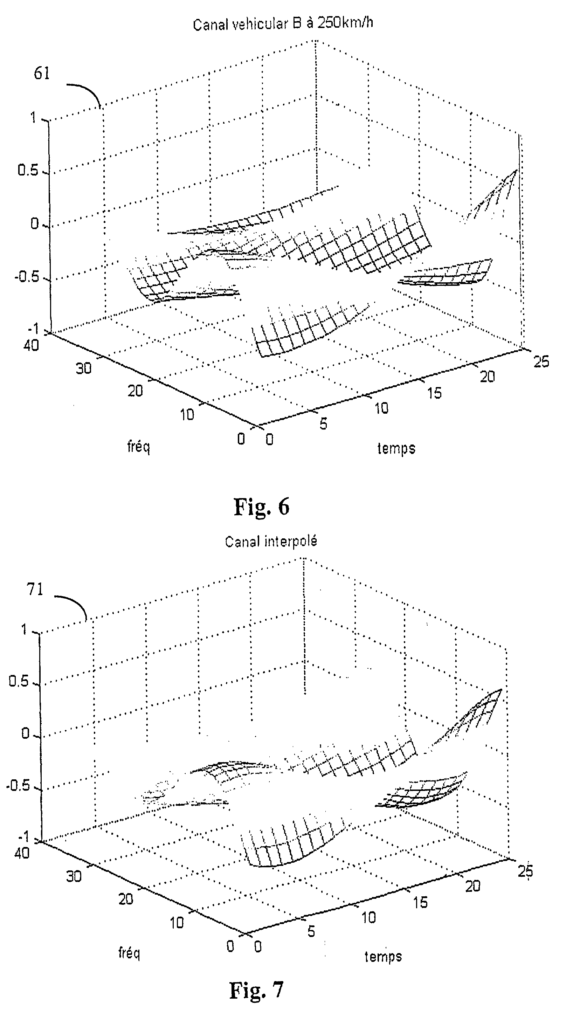

A titre d'illustration, les figures 6 présentent des signaux bidimensionnels pour un canal de type "Vehicular B" à 250 km/h défini par l'ETSI sous la référence "TR 101 112 V.3.2.0 annexe B.1 ETSI".

Les caractéristiques précises du canal sont les suivantes:

- Le canal est de type rural
- Le spectre Doppler est en corne (spectre qui correspond au spectre de puissance d'une sinusoïde pure après propagation dans un canal mobile à réflexions supposées isotropiques)
- Les retards (dus aux trajets multiples) sont résumés dans le tableau suivant:

| Retard en nsec | Atténuation en dB |
|---|---|
| 0 | -2.5 |
| 300 | 0 i |
| 8900 | -12.8 |
| 12900 | -10.0 |
| 17100 | -25.2 |
| 20000 | -16.0 |

La modulation est une modulation de type OFDM/IOTA avec les paramètres suivants:

- le temps symbole IOTA est égal à 133.33 µs; et
- l'espacement entre sous-porteuses vaut 3.75 kHz.

Le canal est supposé non bruité.
La figure 7 illustre le même canal qu'illustré en figure 6 mais estimé selon l'invention grâce à l'utilisation de SSAD 2D.
Les caractéristiques des SSAD 2D sont les suivantes:

- le nombre de SSAD 2D conservées est égal à 25
- le pas des symboles pilotes en temps est égal 5 (ce qui permet d'obtenir quatre symboles utiles pour un symbole de référence en temps)
- le pas des symboles pilotes en fréquence est égal à 8 (ce qui permet d'obtenir sept symboles utiles pour un symbole de référence en fréquence)

On constate que le canal selon le modèle décrit en figure 6 et son estimation selon l'invention sont très similaires. Ainsi, l'estimation de canal avec des SSAD bidimensionnelles est très fiable et efficace.
Bien entendu, l'invention n'est pas limitée aux exemples de réalisation mentionnés ci-dessus.
En particulier, l'homme du métier pourra apporter toute variante dans le type de modulation multiporteuse, notamment OFDM, qui pourra par exemple, être de type OFDM/QAM ou OFDM/OQAM.
On note également que l'invention trouve des applications dans de très nombreux domaines, notamment lorsqu'une haute efficacité spectrale est souhaitée et que le canal est fortement non-stationnaire lorsque notamment l'utilisation de techniques de modulation multiporteuses se révèle être un choix judicieux.
Une première catégorie d'applications concerne la radiodiffusion numérique terrestre (par exemple de type DAB (de l'anglais « Digital Audio Broadcasting » ou « Diffusion Numérique Audio » en français) ou DVB-T), qu'il s'agisse notamment d'image, de son et/ ou de données.
Une seconde catégorie d'applications concerne les radiocommunications numériques. L'invention peut trouver notamment des applications dans des systèmes de communication numérique à haut débit provenant ou à destination de mobiles (par exemple selon les normes de communication mobile de troisième génération), ainsi que dans des réseaux locaux à haut débit, utilisant des techniques de modulation multiporteuses.
Une troisième catégorie d'applications est celle des transmissions sous-marines pour lesquelles les techniques de modulation multiporteuses sont bien adaptées.
D'une manière générale, l'invention trouve donc des applications dans tous les domaines où des techniques de modulations multiporteuses trouvent elles-mêmes des applications (par exemple dans les systèmes combinant CDMA (« Code Division Multiple Access » ou, en français, « Accès multiple par répartition par code ») et OFDM (notamment, « MC-CDMA » signifiant « Multi-Carrier CDMA » ou, en français « CDMA à porteuse multiple »).

**Revendications**

1. Procédé d'estimation de la fonction de transfert d'un canal (42) de transmission d'un signal multiporteuse formé d'une succession temporelle de symboles constitués d'un ensemble d'éléments de données, chacun desdits éléments de données modulant une fréquence porteuse dudit signal,
   lesdits éléments de données comprenant d'une part des éléments de référence, appelés pilotes, dont la valeur à l'émission est connue d'au moins un récepteur (43) destiné à effectuer une réception dudit signal, et d'autre part des éléments de données dits informatifs, représentatifs d'au moins un signal source à transmettre,
   **caractérisé en ce qu'**il comprend :

   - une étape de détermination d'un jeu de séquences sphéroïdales aplaties discrètes (SSAD) bidimensionnelles ;
   - une étape d'écriture (53) de ladite fonction de transfert sous la forme d'une combinaison d'au moins certaines desdites séquences sphéroïdales aplaties discrètes bidimensionnelles dudit jeu ;
   - une étape d'interpolation (54) bidimensionnelle en temps et en fréquence d'au moins certains coefficients de ladite combinaison, de manière à obtenir une estimation de ladite fonction de transfert en tout point d'un réseau temps-fréquence.

2. Procédé selon la revendication 1, **caractérisé en ce que** ladite étape d'écriture (53) met en oeuvre une projection desdits pilotes sur lesdites séquences sphéroïdales aplaties discrètes bidimensionnelles.

3. Procédé selon l'une quelconque des revendications 1 et 2, **caractérisé en ce qu'**au cours de ladite étape de détermination, il met en oeuvre au moins une étape de sélection d'au moins certaines desdites séquences sphéroïdales aplaties discrètes (SSAD), en fonction d'au moins une caractéristique dudit canal (42) de transmission.

4. Procédé selon la revendication 3, **caractérisé en ce que** la ou lesdites caractéristiques du canal (42) de transmission comprennent la fréquence Doppler maximale $(f_d)$ et/ou l'étalement $(T_{max})$ de la réponse impulsionnelle du canal ("delay spread") maximal.

5. Procédé selon l'une quelconque des revendications 3 et 4, **caractérisé en ce que** ladite étape de sélection met en oeuvre une sous-étape de tri desdites séquences sphéroïdales aplaties discrètes (SSAD) bidimensionnelles en fonction d'un critère d'énergie prédéterminé $(Q_o)$.

6. Procédé selon l'une quelconque des revendications 3 à 5, **caractérisé en ce que** le nombre de séquences sphéroïdales aplaties discrètes bidimensionnelles sélectionnées au cours de ladite étape de sélection tient compte d'au moins un critère de qualité d'estimation de ladite fonction de transfert.

7. Procédé selon l'une quelconque des revendications 3 à 6, **caractérisé en ce que** le nombre de séquences sphéroïdales aplaties discrètes bidimensionnelles sélectionnées $(N')$ au cours de ladite étape de sélection est inférieur ou égal au nombre de pilotes $(K)$ dudit signal.

8. Procédé selon l'une quelconque des revendications 1 à 7, **caractérisé en ce qu'**au cours de ladite étape de détermination, une SSAD bidimensionnelle dudit jeu est obtenue par produit tensoriel d'au moins deux SSAD monodimensionnelles.

9. Procédé selon l'une quelconque des revendications 1 à 8, **caractérisé en ce qu'**il met en oeuvre un algorithme d'estimation-maximi ation (EM).

10. Procédé selon l'une quelconque des revendications 1 à 9, **caractérisé en ce qu'**il comprend, au cours de ladite étape d'écriture, au moins une étape d'estimation d'au moins certains coefficients de ladite combinaison mettant en oeuvre une méthode des moindres carrés.

11. Procédé de réception d'un signal numérique, **caractérisé en ce qu'**il met en oeuvre une étape d'estimation d'une fonction de transfert d'un canal de transmission dudit signal selon le procédé de l'une quelconque des revendications 1 à 10.

12. Récepteur (43) d'un signal (42) multiporteuse formé d'une succession temporelle de symboles constitués d'un ensemble d'éléments de données, chacun desdits éléments de données modulant une fréquence porteuse dudit signal,

lesdits éléments de données comprenant d'une part des éléments de référence, appelés pilotes, dont la valeur à l'émission est connue d'au moins un récepteur destiné à effectuer une réception dudit signal, et d'autre part des éléments de données dits informatifs, représentatifs d'au moins un signal source à transmettre,
**caractérisé en ce qu'**il comprend :

- des moyens de mémorisation d'un jeu de séquences sphéroïdales aplaties discrètes (SSAD) bidimensionnelles ;
- des moyens d'écriture d'une fonction de transfert d'un canal de transmission dudit signal sous la forme d'une combinaison d'au moins certaines desdites séquences sphéroïdales aplaties discrètes bidimensionnelles dudit jeu ;
- des moyens d'interpolation bidimensionnelle en temps et en fréquence d'au moins certains coefficients de ladite combinaison, de manière à obtenir une estimation de ladite fonction de transfert en tout point du réseau temps-fréquence.

**13.** Application du procédé d'estimation selon l'une quelconque des revendications 1 à 11 à l'un au moins des domaines suivants :

- la radiodiffusion numérique terrestre ;
- les radiocommunications numériques ;
- la transmission sous-marine de données.

**Claims**

**1.** Method for estimating the transfer function of a channel (42) for transmission of a multicarrier signal formed by a chronological succession of symbols consisting of an ensemble of data elements, each of the said data elements modulating one carrier frequency of the said signal,
the said data elements comprising on the one hand reference elements, referred to as pilots, of which the value at transmission is known by at least one receiver (43) intended to receive the said signal, and on the other hand so-called information elements representing at least one source signal to be transmitted,
**characterised in that** it comprises:

- a step of determining a set of two-dimensional discrete prolate spheroidal sequences (DPSS);
- a step (53) of writing the said transfer function in the form of a combination of at least some of the said two-dimensional discrete prolate spheroidal sequences in the said set;
- a step (54) of two-dimensionally interpolating at least some coefficients of the said combination in time and in frequency, so as to obtain an estimate of the said transfer function at any point of a time-frequency space.

**2.** Method according to Claim 1, **characterised in that** the said writing step (53) employs a projection of the said pilots onto the said two-dimensional discrete prolate spheroidal sequences.

**3.** Method according to either one of Claims 1 and 2, **characterised in that** during the said determination step, it employs at least one step of selecting at least some of the said discrete prolate spheroidal sequences (DPSS) as a function of at least one characteristic of the said transmission channel (42).

**4.** Method according to Claim 3, **characterised in that** the said characteristics of the transmission channel (42) comprise the maximum Doppler frequency ($f_d$) and/or the maximum spread $(T_{max})$ of the impulse response of the channel (delay spread).

**5.** Method according to either one of Claims 3 and 4, **characterised in that** the said selection step employs a substep of sorting the said two-dimensional discrete prolate spheroidal sequences (DPSS) as a function of a predetermined energy criterion ($Q_o$) .

**6.** Method according to any one of Claims 3 to 5, **characterised in that** the number of two-dimensional discrete prolate spheroidal sequences selected during the said selection step takes into account at least one criterion relating to the quality of estimation of the said transfer function.

**7.** Method according to any one of Claims 3 to 6, **characterised in that** the number ($N'$) of two-dimensional discrete prolate spheroidal sequences selected during the said selection step is less than or equal to the number of pilots (K) of the said signal.

8. Method according to any one of Claims 1 to 7, **characterised in that** during the said determination step, a two-dimensional DPSS in the said set is obtained by tensor multiplication of at least two one-dimensional DPSSs.

9. Method according to any one of Claims 1 to 8, **characterised in that** it employs an estimation maximisation (EM) algorithm.

10. Method according to any one of Claims 1 to 9, **characterised in that** during the said writing step, it comprises at least one step of estimating at least some coefficients of the said combination by using a least squares method.

11. Method for receiving a digital signal, **characterised in that** it employs a step of estimating a transfer function of a channel for transmission of the said signal according to the method of any one of Claims 1 to 10.

12. Receiver (43) for reception of a multicarrier signal (42) formed by a chronological succession of symbols consisting of an ensemble of data elements, each of the said data elements modulating one carrier frequency of the said signal, the said data elements comprising on the one hand reference elements, referred to as pilots, of which the value at transmission is known by at least one receiver intended to receive the said signal, and on the other hand so-called information elements representing at least one source signal to be transmitted, **characterised in that** it comprises:

   - means for storing a set of two-dimensional discrete prolate spheroidal sequences (DPSS);
   - means for writing a transfer function of a channel for transmission of the said signal in the form of a combination of at least some of the said two-dimensional discrete prolate spheroidal sequences in the said set;
   - means for two-dimensionally interpolating at least some coefficients of the said combination in time and in frequency, so as to obtain an estimate of the said transfer function at any point of the time-frequency space.

13. Application of the estimation method according to any one of Claims 1 to 11 to at least one of the following fields:

   - terrestrial digital radio broadcasting;
   - digital radiocommunication;
   - submarine data transmission.

**Patentansprüche**

1. Verfahren zum Schätzen der Übertragungsfunktion eines Sendekanals (42) eines Mehrträgersignals, das aus einer zeitlichen Folge von aus einer Menge von Datenelementen gebildeten Symbolen besteht, wobei jedes dieser Datenelemente eine Trägerfrequenz des besagten Signals moduliert, wobei die Datenelemente einerseits Pilotelemente genannte Referenzelemente, deren Wert beim Senden mindestens einem für den Empfang dieses Signals vorgesehenen Empfänger (43) bekannt ist und andererseits informativ genannte Datenelemente umfassen, die für mindestens einem zu sendenden Quellensignal repräsentativ sind, **dadurch gekennzeichnet, dass** es folgendes umfasst:

   - einen Schritt zum Bestimmen eines Satzes zweidimensionaler, abgeflachter sphäroidischer diskreter Folgen (SSAD);
   - einen Schritt zum Schreiben (53) dieser Übertragungsfunktion in der Form einer Kombination von mindestens einigen dieser zweidimensionalen, abgeflachten sphäroidischen diskreten Folgen des erwähnten Satzes;
   - einen zweidimensionalen Interpolationsschritt (54) nach Zeit und Frequenz von mindestens einigen Koeffizienten der besagten Kombination, um an jedem Punkt eines Zeit-Frequenz-Gitters, eine Schätzung der besagten Übertragungsfunktion zu erhalten.

2. Verfahren nach Anspruch 1, **dadurch gekennzeichnet, dass** der Schritt zum Schreiben (53) eine Projektion der besagten Pilotelemente auf die zweidimensionalen, abgeflachten sphäroidischen diskreten Folgen verwendet.

3. Verfahren nach einem der Ansprüche 1 oder 2, **dadurch gekennzeichnet, dass** es beim Bestimmungsschritt mindestens einen Auswahlschritt von mindestens einigen der erwähnten zweidimensionalen, abgeflachten sphäroidischen diskreten Folgen (SSAD) einsetzt, als Funktion von mindestens einer Eigenschaft des erwähnten Sendekanals (42).

4. Verfahren nach Anspruch 3, **dadurch gekennzeichnet, dass** die erwähnte Eigenschaft oder die erwähnten Eigenschaften des Sendekanals (42) die maximale Dopplerfrequenz ($f_d$) und/oder die maximale Ausbreitung ($T_{max}$) der Impulsantwort des Kanals ("delay spread") umfasst bzw. umfassen.

5. Verfahren nach einem der Ansprüche 3 oder 4, **dadurch gekennzeichnet, dass** der Auswahlschritt einen Unterschritt zum Sortieren der erwähnten zweidimensionalen, abgeflachten sphäroidischen diskreten Folgen (SSAD) als Funktion eines vorgegebenen Energiekriteriums ($Q_0$) einsetzt.

6. Verfahren nach einem der Ansprüche 3 bis 5, **dadurch gekennzeichnet, dass** die Zahl der während des Auswahlschritts gewählten zweidimensionalen, abgeflachten sphäroidischen diskreten Folgen mindestens ein Kriterium für die Qualität der Abschätzung der besagten Übertragungsfunktion berücksichtigt.

7. Verfahren nach einem der Ansprüche 3 bis 6, **dadurch gekennzeichnet, dass** die Zahl der während des Auswahlschritts gewählten ($N'$) zweidimensionalen, abgeflachten sphäroidischen diskreten Folgen kleiner oder gleich der Zahl der Pilotelemente ($K$) des besagten Signals ist.

8. Verfahren nach einem der Ansprüche 1 bis 7, **dadurch gekennzeichnet, dass** man eine zweidimensionale SSAD des erwähnten Satzes durch Tensorprodukt von mindestens zwei eindimensionalen SSAD erhält.

9. Verfahren nach einem der Ansprüche 1 bis 8, **dadurch gekennzeichnet, dass** es einen Schätzungs-Maximierungs-Algorithmus (EM) einsetzt.

10. Verfahren nach einem der Ansprüche 1 bis 9, **dadurch gekennzeichnet, dass** es während des Schrittes zum Schreiben mindestens einen Schritt zum Schätzen von mindestens einigen Koeffizienten der Kombination umfasst, bei dem eine Methode der kleinste Fehlerquadrate zum Einsatz kommt.

11. Empfangsverfahren für ein digitales Signal, **dadurch gekennzeichnet, dass** es einen Schritt zum Schätzen einer Übertragungsfunktion eines Sendekanals des Signals nach dem Verfahren eines der Ansprüche 1 bis 10 anwendet.

12. Empfänger (43) eines Mehrträgersignals (42), das aus einer zeitlichen Folge von aus einer Menge von Datenelementen gebildeten Symbolen besteht, wobei jedes dieser Datenelemente eine Trägerfrequenz des besagten Signals moduliert,
wobei die Datenelemente einerseits Pilotelemente genannte Referenzelemente, deren Wert beim Senden mindestens einem für den Empfang dieses Signals vorgesehenen Empfänger bekannt ist und andererseits informativ genannte Datenelemente umfassen, die für mindestens einem zu sendenden Quellensignal repräsentativ sind, **dadurch gekennzeichnet, dass** es folgendes umfasst:

-   Mittel zum Speichern eines Satzes zweidimensionaler, abgeflachter sphäroidischer diskreter Folgen (SSAD);
-   Mittel zum Schreiben einer Übertragungsfunktion eines Sendekanals dieses Signals in der Form einer Kombination von mindestens einigen dieser zweidimensionalen, abgeflachten sphäroidischen diskreten Folgen des erwähnten Satzes;
-   Mittel zur zweidimensionalen Interpolation nach Zeit und Frequenz von mindestens einigen Koeffizienten der besagten Kombination, um an jedem Punkt eines Zeit-Frequenz-Gitters, eine Schätzung der besagten Übertragungsfunktion zu erhalten.

13. Anwendung des Verfahrens zum Schätzen nach einem der Ansprüche 1 bis 11 auf mindestens einem der folgenden Bereiche:

-   den digitalen terrestrischen Rundfunk;
-   den digitalen Funkverkehr;
-   die Übertragung von Daten unter Wasser.

4 DPSS-2D de plus grandes énergies Wt=0.0622, Wf=0.0375

Fig. 1

Fig. 2

Décroissance rapide des valeurs propres 2W'N=3.1

Fig. 3

**Fig. 4**

EP 1 391 095 B1

Initialisation
Détermination DPSS  — 51

Attente données  52

Ecriture combinaison  53

Interpolation bidimensionnelle  54

Fig. 5

24

Canal vehicular B à 250km/h

61

fréq

temps

**Fig. 6**

Canal interpolé

71

fréq

temps

**Fig. 7**